# EUROPÄISCHE PATENTSCHRIFT

(11) **EP 2 335 663 B1**
(45) Veröffentlichungstag und Bekanntmachung des Hinweises auf die Patenterteilung: **18.04.2012**
(21) Anmeldenummer: 09015759.5
(22) Anmeldetag: 19.12.2009
(51) Int. Cl.: A61F 13/15, C08J 5/18

(54) **Verfahren zur Herstellung einer elastischen Folie, insbesondere für Hygieneartikel**
Method for the manufacture of an elastic film, in particular for sanitary items
Procédé de fabrication d'une feuille élastique, notamment pour articles hygiéniques

(43) Veröffentlichungstag der Anmeldung: 22.06.2011
(73) Patentinhaber: Nordenia Deutschland Gronau GmbH, 48599 Gronau (DE)
(72) Erfinder: Rolefs, Mike, 48565 Steinfurt (DE)
(74) Vertreter: Albrecht, Rainer Harald

(56) Entgegenhaltungen:
- WO-A1-02/064176
- WO-A1-2007/070130
- WO-A2-95/24173
- WO-A2-2009/138887

## Beschreibung

Die Erfindung betrifft ein Verfahren zur Herstellung einer elastischen Folie, insbesondere für Hygieneartikel, bei dem durch Vormischung von Polymerkomponenten eine Polymerzusammensetzung hergestellt wird, die Styrol-Block-Copolymere enthält, und anschließend durch Extrusion der Polymerzusammensetzung mindestens eine Schicht erzeugt wird, wobei bei der Vormischung und/oder Extrusion Zeplithe zugeführt werden.

Zur Erzeugung von elastischen Folien wird zunächst eine Polymerzusammensetzung durch einen Compoundierprozess hergestellt. Bei der Compoundierung handelt es sich um einen Veredelungsprozess von Kunststoffen zur gezielten Optimierung der Produkteigenschaften. Bei der Herstellung von elastischen Folien, insbesondere im Hygienebereich, enthält die Polymerzusammensetzung sehr häufig Styrol-Block-Copolymere aufgrund des günstigen Eigenschaftenprofils und der relativ geringen Kosten. Bei der Compoundierung findet eine Vormischung von Polymerkomponenten mit Zusatzstoffen wie Öl statt. Diese Mischung wird vorzugsweise in Doppelschneckenextrudern durchgeführt.

Durch die hohe thermische Belastung während des Compoundier- und Extrusionsprozesses kommt es bei polystyrolhaltigen Rezepturen zur Freisetzung von Styrol-Monomeren. Diese Styrol-Monomere haben einen charakteristischen Geruch, der häufig als störend empfunden wird.

In der EP 0 749 295 B1 wird ein Hygieneartikel beschrieben, der eine flüssigkeitsdurchlässige Oberschicht und eine flüssigkeitsundurchlässige Unterschicht umfasst. Zwischen beiden Schichten ist ein absorbierender Kern angeordnet. Die Oberschicht umfasst einen mit Öffnungen versehenen Kunststofffilm, der eine Menge eines mit einem Schwermetallion imprägnierten Zeoliths aufweist. Der Produktionsartikel ist zur Minimierung von Gerüchen geeignet, die von Körperflüssigkeiten und Schweiß verursacht werden.

In der EP 1 357 950 B1 wird ein Geruchsadsorptionsmittel beschrieben, welches insbesondere auf dem Gebiet der Hygieneartikel zum Einsatz kommt. Das Geruchsadsorptionsmittel umfasst ein Granulat, auf das nachträglich Zeolithe aufgeschmolzen werden.

Ein Verfahren mit den Merkmalen des Oberbegriffes des Patentanspruches 1 ist aus der WO 2009/138887 A2 bekannt. Zeolithe werden neben einer Vielzahl weiterer organischer oder anorganischer Partikel als mögliche Füllstoffe genannt. Durch die Füllstoffe soll die Trübung der Folie oder auch die Durchlässigkeit für Gas oder Dampf eingestellt werden. Beispielsweise können durch ein Strecken im Bereich der Füllstoffe Poren erzeugt werden, um eine mikroporöse, atmungsaktive elastische Folie bereit zu stellen.

Aufgabe der vorliegenden Erfindung ist es, eine Folie zu entwickeln, die mindestens eine Schicht aufweist, welche den Geruch von Styrol-Monomeren minimiert.

Diese Aufgabe wird erfindungsgemäß durch das Verfahren nach Anspruch 1 gelöst. Erfindungsgemäß werden bei der Vormischung der Polymerkomponenten und/oder bei der Extrusion der Polymerzusammensetzung Zeolithe zugeführt, die Porenöffnungen größer als 2,5 Angström und kleiner als 5,5 Angström aufweisen. Durch diese Vorgehensweise werden die Zeolithe in die Polymermatrix eingebettet. Dies führt zu einer homogenen Verteilung der Zeolithe. Die in die Schicht integrierten Zeolithe adsorbieren Styrol-Monomere, die von den Styrol-Block-Copolymeren freigesetzt werden. Maßgeblich für eine gezielte Adsorption von Styrol-Monomeren ist die Auswahl von Zeolithen mit der geeigneten Größe der Porenöffnungen zwischen 2,5 Angström und 5,5 Angström. Die elastische Folie kann als Monofolie ausgeführt oder mehrlagig sein. Mehrlagige Folien können durch Coextrusion hergestellt werden. Erfindungsgemäß enthält dabei mindestens eine Schicht Zeolithe, die bei der Compoundierung und/oder Extrusion zugeführt werden.

Maßgeblich für eine effektive Adsorption von Styrol-Monomeren ist die Auswahl der richtigen Zeolithsorte. Zeolithe sind kristalline Alumosilikate, die in zahlreichen Modifikationen vorkommen. Sie bestehen aus einer mikroporösen Gerüststruktur aus AlO₄⁻- und SiO₄-Tetraedern. Je nach Typ des Zeolithen ergibt sich eine Struktur aus gleichförmigen Poren und/oder Kanälen, in denen Stoffe adsorbiert werden können. Als besonders geeignet für die Adsorption von Styrol-Monomeren erweisen sich Zeolithe vom Strukturtyp ZSM-5, der zu der Klasse der Pentasile gehört. Bei den meisten Pentasilen liegt das Si/Al-Verhältnis zwischen 1 und 100. Damit gehört der Strukturtyp ZSM-5 zu den siliziumreichen Zeolithen. ZSM-5 Zeolithe mit hohen Si/Al-Verhältnissen zeichnen sich durch eine hohe Hydrophobie, Festigkeit und thermische Stabilität aus. Das hydrophobe Verhalten des ZSM-5 ist wichtig, damit es nicht zu einer vorrangigen Adsorption von Wasser an den Zeolithen kommt. Somit kann die Folie Styrol-Monomere auch unter feuchten Bedingungen effektiv adsorbieren.

Nach der IUPAC-Nomenklatur wird der Gerüsttyp des ZSM-5 mit MFI bezeichnet, abgeleitet von: Zeolithe Socony **M**obil-**f**ive.

Bei einer besonders günstigen Ausführung der Erfindung beträgt der Gewichtsanteil an Zeolithen in der Schicht zwischen 1 Gew.-% und 5 Gew.-%. Wird zu wenig Zeolithmaterial eingebettet, so verschlechtert sich das Adsorptionsver mögen. Ein zu großer Anteil kann die charakteristischen Eigenschaften der Folie verändern.

Es kann auch eine Mischung aus zwei Zeolithsorten verwendet werden, die sich in der Größe ihrer Porenöffnung unterscheiden. Die erste Zeolithsorte weist beispielsweise eine Porenöffnung von 3 Angström auf. Die zweite Zeolithsorte hat beispielsweise eine Porenöffnung von ca. 5 Angström. Der Einsatz einer Mischung von zwei Zeolithsorten kann gezielt auf die Abmessungen des Styrols abgestimmt werden und führt zu einer selektiven Adsorption dieser Monomere.

Die nach dem erfindungsgemäßen Verfahren hergestellte elastische Folie ist für Hygieneartikel geeignet und kann beispielsweise zur Herstellung von Windel verschlüssen, elastischen Abschnitten einer Windel und dergleichen eingesetzt werden. Eine geeignete Polymermischung zur Herstellung der Folie weist vorzugsweise mehr als 40 Gew.-% eines thermoplastischen Elastomers aus der Gruppe der Styrol-Block-Copolymere auf. Bei dem Styrol-Block-Copolymer kann es sich insbesondere um ein Styrol-Isopren-Styrol-Block-Copolymer (SIS), Styrol-Ethenbuten-Styrol-Copolymer (SEBS), Styrol-Butadien-Styrol-Copolymer (SBS) oder eine Mischung dieser Polymere handeln. Eine bevorzugte Polymerzusammensetzung enthält ein Styrol-Block-Copolymer, Polystyrol und Polyethylen. Zusätzlich werden den Polymerkomponenten bei der Compoundierung Weichmacheröle zugefügt. Als Weichmacheröle kommen beispielsweise Weißöle zur Anwendung, die für medizinische Anwendungen zugelassen sind. Hierbei handelt es sich vorzugsweise um aliphatische Kohlenwasserstoffverbindungen mit sehr hohem Reinheitsgrad.

Weitere Vorteile und Merkmale der Erfindung ergeben sich aus der Beschreibung von Beispielen. Dabei zeigt
- **Fig. 1**: eine Darstellung der verwendeten Zeolithe,
- **Fig. 2**: eine Darstellung eines Styrol-Moleküls,
- **Fig. 3 bis 5**: Tabellen mit den Ergebnissen von Geruchstests an Folien,

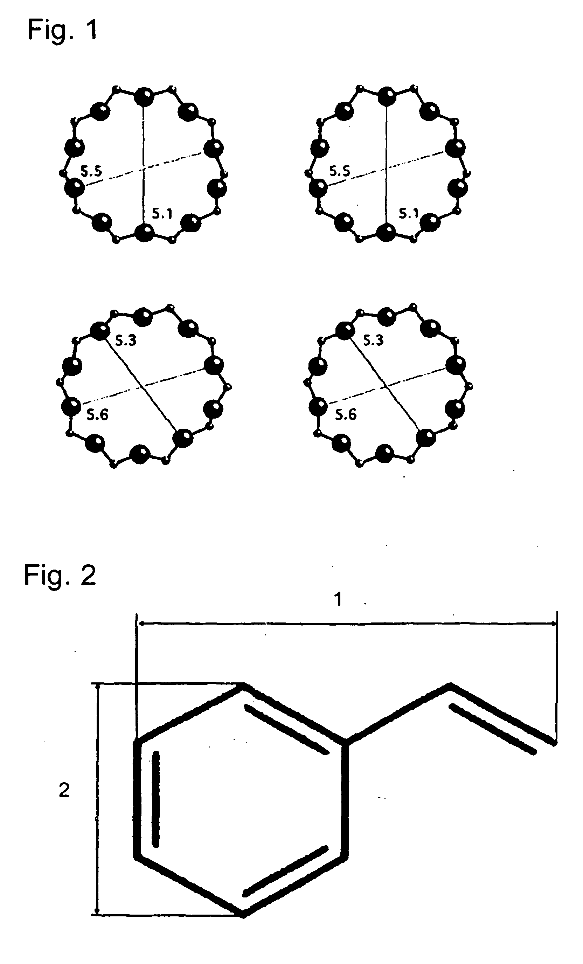

In Fig. 1 sind Strukturen von Zeolithen dargestellt, die bei der Erfindung eingesetzt werden. Dabei handelt es sich um Zeolithe vom Strukturtyp MFI (ZSM-5). Bei der MFI-Struktur gibt es zwei Arten von Kanälen, zum einen parallel verlaufende Kanäle mit einer Porenöffnung von 5,3 Å · 5,6 Å (0,53 nm · 0,56 nm) und zum anderen sinusförmig verlaufende Kanäle mit einer Porenöffnung von 5,1 Å · 5,5 Å (0,51 nm · 0,55 nm). Wie in Fig. 1 gezeigt, besteht eine Porenöffnung dieser Kanäle aus zehn Tetraedern. Man spricht deshalb auch von einer 10-Ring-Pore. Der ZSM-5 gehört damit zu den mittelporigen Zeolithen.

In Fig. 2 ist die Strukturformel von Styrol dargestellt. Die lange Seite 1 des Styrol Moleküls beinhaltet den aromatischen Ring und die Vinylgruppe. Die Abmessung der langen Seite 1 beträgt 485 pm. Die kurze Seite 2 des Styrol Moleküls umfasst nur den aromatischen Ring. Die Abmessung der kurzen Seite 2 beträgt 280 pm. Die Fläche des Styrol-Moleküls ergibt sich als Produkt der beiden Abmessungen A = 485 pm · 280 pm.

Vorzugsweise werden die eingesetzten Zeolithe auf die Abmessungen des Styrol-Moleküls abgestimmt. Dabei erweist sich eine Mischung aus zwei Zeolithsorten als günstig. Die erste Zeolithsorte mit einer Porenöffnung von ca. 3 Angström (= 300 pm) entspricht in etwa der kurzen Seite 2 des Styrol-Moleküls. Die zweite Zeolithsorte mit einer Porenöffnung von ca. 5 Angström (= 500 pm) entspricht in etwa der langen Seite 1 des Styrol-Moleküls. Der Einsatz einer Mischung dieser beiden Zeolithsorten ist gezielt auf die Abmessungen des Styrols abgestimmt und führt zu einer selektiven Adsorption.

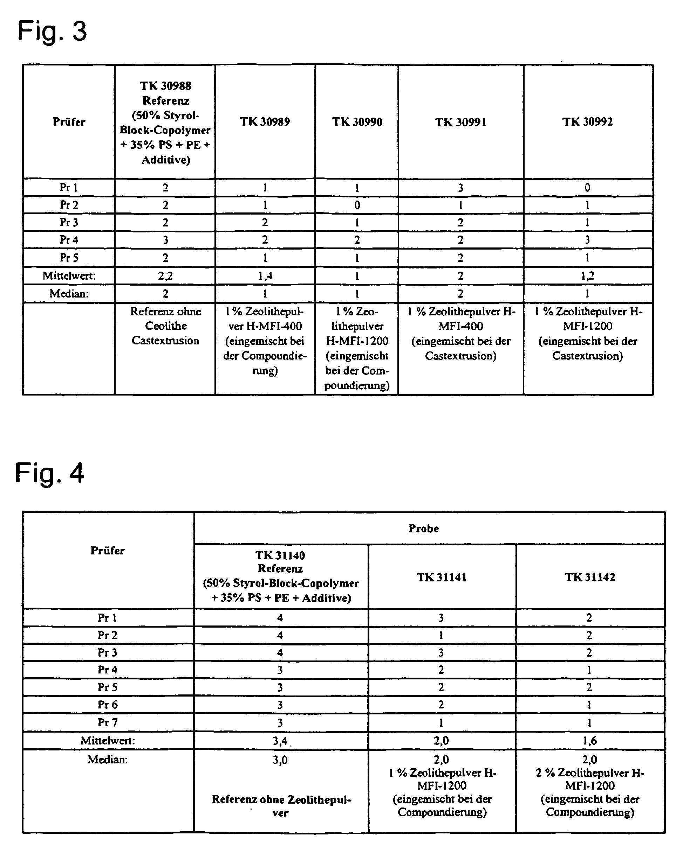

Fig. 3 zeigt eine Tabelle mit den Ergebnissen eines Geruchstests von fünf Monofolien. Untersucht wurde wie stark die nach dem erfindungsgemäßen Verfahren hergestellten Folien im Vergleich zu Folien ohne Zeolithzusatz Styrole emittieren. Die Folie TK 30988 dient dabei als Referenzfolie. Den anderen Folien wurde jeweils 1 Gew.-% Zeolithpulver beigemischt. Die Folien setzen sich aus 50 % eines Styrol-Block-Copolymers, 35 % Polystyrol, Polyethylen und Additiven zusammen.

Vor der Folienfertigung im Castverfahren wird eine Compoundierung durchgeführt. Bei der Compoundierung findet eine Vormischung der Polymerkomponenten mit Zusatzstoffen wie Öl statt. Diese Mischung wird in Doppelschneckenextrudem mit besonderen Dosierelementen durchgeführt. Man erhält ein Granulat, das dann bei der Folienextrusion problemlos dosiert werden kann. Mischt man die Zeolithe beim Compoundierprozess ein, ist davon auszugehen, dass sie besser in der Matrix verteilt werden. Allerdings wird das Zeolith Material dann sowohl bei der Compoundierung als auch bei der Extrusion der Kunststoffschmelze durch Scherung und Temperaturerhöhung belastet.

Bei der Herstellung der Folie TK 30989 wurden Zeolithe vom Typ H-MFI-400 bei der Compoundierung eingemischt. Die Folie TK 30990 enthält H-MFI-1200 Zeolithe, die ebenfalls bei der Compoundierung zugeführt wurden. Bei der Herstellung der Folie TK 30991 wurde Zeolithpulver vom Typ H-MFI-400 bei der Castextrusion zugeführt. Die Folie TK 30992 enthält H-MFI-1200 Zeolithe, die ebenfalls bei der Castextrusion zugegeben wurden.

In 1000 ml großen Weithalsflaschen wurden die Folien bei Normklima (23 °C /50 % rh) gelagert. Als Probenmenge wurden drei DIN A4 Blätter große Folien bzw. 150 g Granulat verwendet. Fünf Prüfer beurteilten nach drei Tagen den Geruch nach folgender Bewertung:

| | |
|---|---|
| 0 = | keine wahrnehmbare Geruchsabweichung |
| 1 = | gerade wahrnehmbare Geruchsabweichung |
| 2 = | schwache Geruchsabweichung |
| 3 = | deutliche Geruchsabweichung |
| 4 = | starke Geruchsabweichung (nicht notwendigerweise das wahrnehmbare Maximum) |

Den Prüfern diente entweder ein leeres Weithalsglas oder ein Material, welches der Projektleiter als Standard vorgab, als Referenz. Der zeitliche Abstand zwischen den Prüfvorgängen betrug ca. 15 Minuten.

Am besten schneidet die Folie TK 30990 ab. Diese enthält Zeolithe der Sorte H-MFI-1200, die bei der Compoundierung zugeführt werden. Ebenso gute Ergebnisse erhält man mit der Zeolithsorte Na-MFI-1200.

Fig. 4 zeigt eine Tabelle mit den Ergebnissen eines Geruchstests von drei Monofolien. Die Folie TK 31140 dient dabei als Referenzfolie. Die Folien setzen sich aus 50 % eines Styrol-Block-Copolymers, 35 % Polystyrol, Polyethylen und Additiven zusammen.

Die Folie TK 31141 enthält nur 1 Gew.-% Zeolithpulver. Der Folie TK 31142 wurde 2 Gew.-% Zeolithpulver beigefügt. In beiden Fällen wurden Zeolithe vom Typ H-MFI-1200 verwendet. Diese wurden in beiden Fällen bereits bei der Compoundierung eingemischt. Sieben Prüfer beurteilten in dieser Versuchsreihe den Geruch.

Die Folie 31142 hat mit 1,6 einen etwas besseren Mittelwert als die Folie 31141 mit 2,0. Eine Steigerung des Zeolithanteils auf 2 % führt zu einer leichten Verbesserung des Adsorptionsvermögens.

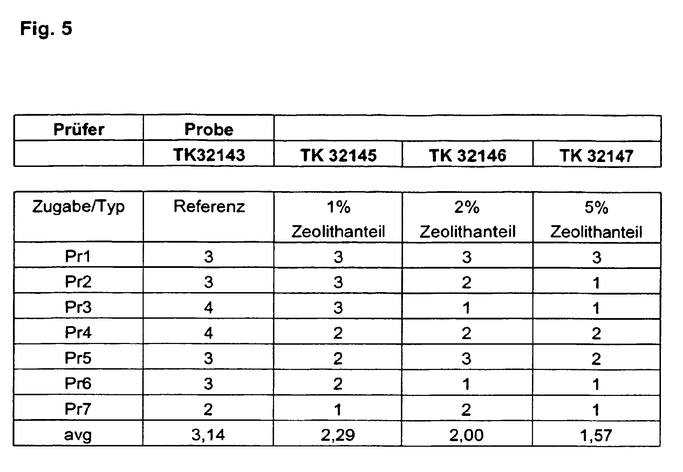

Fig. 5 zeigt eine Tabelle mit den Ergebnissen weiterer Geruchstests. Die Folie TK 32143 enthält keine Zeolithe und dient als Referenzfolie. In den weiteren Versuchsreihen wurden Zeolithe des Typs Na-MFI-1200 zugemischt, wobei der Zeolithanteil zwischen 1 Gew-% und 5 Gew.-% variiert wurde und das Zeolithpulver stets bereits bei der Compoundierung zugemischt wurde. Sieben Prüfer beurteilten in den Versuchsreihen TK 32145 bis TK 32147 den Geruch. Mit zunehmendem Zeolithanteil verbessert sich die Adsorption. Subjektiv wurden mit dem Zeolith Na-MFI-1200 noch etwas bessere Ergebnisse erzielt als mit den Zeolith-Sorten H-MFI-400 und H-MFI-1200.

## Patentansprüche

1. Verfahren zur Herstellung einer elastischen Folie, insbesondere für Hygieneartikel, wobei durch Vormischung von Polymerkomponenten eine Polymerzusammensetzung hergestellt wird, die Styrol-Block-Copolymere enthält, und anschließend durch Extrusion der Polymerzusammensetzung mindestens eine Schicht erzeugt wird, wobei bei der Vormischung und/oder Extrusion Zeolithe zugeführt werden, **dadurch gekennzeichnet, dass** die Porenöffnungen der Zeolithe größer als 2,5 Angström und kleiner als 5,5 Angström sind.

2. Verfahren nach Anspruch 1, **dadurch gekennzeichnet, dass** die Zeolithe vom Strukturtyp ZSM-5 sind.

3. Verfahren nach einem der Ansprüche 1 Oder 2, **dadurch gekennzeichnet, dass** 1 Gew.-% bis 5 Gew.-% an Zeolithen zugeführt werden.

4. Verfahren nach einem der Ansprüche 1 bis 3, **dadurch gekennzeichnet, dass** die Schicht eine Mischung von zwei Zeolithsorten enthält, die sich in der Größe ihrer Porenöffnung unterscheiden.

5. Verfahren nach Anspruch 4, **dadurch gekennzeichnet, dass** die erste Zeolithsorte eine Porenöffnung von ca. 3 Angström und die zweite Zeolithsorte eine Porenöffnung von ca. 5 Angström aufweist.

6. Verfahren nach einem der Ansprüche 1 bis 5, **dadurch gekennzeichnet, dass** die Polymermischung mehr als 40 Gew.-% an Styrol-Block-Copolymeren enthält.

7. Verfahren nach einem der Ansprüche 1 bis 6, **dadurch gekennzeichnet, dass** die Polymerzusammensetzung ein Styrol-Block-Copolymer, Polystyrol und Polyethylen enthält.

8. Verfahren nach Anspruch 6 oder 7, **dadurch gekennzeichnet, dass** als Styrol-Block-Copolymer ein Styrol-Isopren-Styrol-Block-Copolymer (SIS), Styrol-Ethenbuten-Styrol-Copolymer (SEBS), Styrol-Butadien-Styrol-Copolymer (SBS) oder eine Mischung dieser Polymere verwendet wird.

## Claims

1. A method for producing an elastic film, in particular for hygiene articles, wherein by premixing polymer components, a polymer composition containing styrene block copolymers is prepared, and then by extrusion of this polymer composition, at least one layer is produced, wherein zeolites are supplied during premixing and/or extrusion, **characterized in that** the pore openings of the zeolites are larger than 2.5 Ångstrom and smaller than 5.5 Ångstrom.

2. The method according to Claim 1, **characterized in that** the zeolites are of structural type ZSM-5.

3. The method according to any one of Claims 1 or 2, **characterized in that** zeolites are added in the amount of1 wt% to 5 wt%.

4. The method according to any one of Claims 1 to 3, **characterized in that** the layer contains a mixture of two types of zeolites, which differ in the size of their four openings.

5. The method according to Claim 4, **characterized in that** the first type of zeolite has a pore opening of approx. 3 Ångstrom and the second type of zeolite has a pore opening of approx. 5 Ångstrom.

6. The method according to any one of Claims 1 to 5, **characterized in that** the polymer mixture contains more than 40 wt% of styrene block copolymers.

7. The method according to any one of Claims 1 to 6, **characterized in that** the polymer composition contains a styrene block copolymer, polystyrene and polyethylene.

8. The method according to Claim 6 or 7, **characterized in that** the styrene-isoprene-styrene block copolymer (SIS), a styrene-ethene-butene-styrene copolymer (SEBS), a styrene-butadiene-styrene copolymer (SBS) or a mixture of these polymers is used.

## Revendications

1. Procédé de fabrication d'un film élastique, notamment pour des articles hygiéniques, par prémélange de composants polymères il est fabriqué une composition de polymères, qui contient des copolymères blocs styrène et ensuite par extrusion de la composition de polymères il est crée au moins une couche, lors du prémélange et/ou de l'extrusion, des zéolithes étant amenés, **caractérisé en ce que** les ouvertures de pores des zéolithes sont supérieures à 2,5 angströms et inférieures à 5,5 angströms.

2. Procédé selon la revendication 1, **caractérisé en ce que** les zéolithes sont de structure de type ZSM-5.

3. Procédé selon l'une quelconque des revendications 1 ou 2, **caractérisé en ce que** de 1 % en poids à de 5 % en poids de zéolithes sont amenés.

4. Procédé selon l'une quelconque des revendications 1 à 3, **caractérisé en ce que** la couche contient un mélange de deux sortes zéolithes, qui se différencient par la taille de leurs ouvertures de pores.

5. Procédé selon la revendication 4, **caractérisé en ce que** la première sorte de zéolithes présente une ouverture de pores d'environ 3 angströms et la deuxième sorte de zéolithes présente une ouverture de pores d'environ 5 angströms.

6. Procédé selon l'une quelconque des revendications 1 à 5, **caractérisé en ce que** le mélange de polymères contient plus de 40 % en poids de copolymères bloc styrène.

7. Procédé selon l'une quelconque des revendications 1 à 6, **caractérisé en ce que** la composition de polymères contient un copolymère bloc styrène, du polystyrène et du polyéthylène.

8. Procédé selon la revendication 6 ou 7, **caractérisé en ce qu'**en tant que copolymère bloc styrène, on utilise un copolymère bloc styrène-isoprène (SIS), un copolymère bloc styrène-éthylène-butylène (SEBS), un copolymère bloc butadiène-styrène (SBS).
